# EUROPEAN PATENT SPECIFICATION

(11) **EP 3 142 336 B1**
(45) Date of publication and mention of the grant of the patent: **16.12.2020**
(21) Application number: 15789820.6
(22) Date of filing: 10.03.2015
(51) Int. Cl.: H04W 4/21, H04M 3/42, H04W 52/02, H04W 4/12, H04W 4/08, H04M 3/54

(54) **SYNCHRONIZATION METHOD FOR NOTIFICATION MESSAGE OF ELECTRONIC DEVICE, AND ELECTRONIC DEVICE**
SYNCHRONISATIONSVERFAHREN FÜR EINE BENACHRICHTIGUNGSMELDUNG EINER ELEKTRONISCHEN VORRICHTUNG UND ELEKTRONISCHE VORRICHTUNG
PROCÉDÉ DE SYNCHRONISATION POUR UN MESSAGE DE NOTIFICATION D'UN DISPOSITIF ÉLECTRONIQUE, ET DISPOSITIF ÉLECTRONIQUE

(30) Priority: 07.05.2014 CN 201410190821
(43) Date of publication of application: 15.03.2017
(73) Proprietor: Huizhou TCL Mobile Communication Co., Ltd., Huizhou, Guangdong 516006 (CN)
(72) Inventor: ZHENG, Yu, Huizhou Guangdong 516006 (CN)
(74) Representative: Brachmann, Roland W.
(86) International application number: PCT/CN2015/073919
(87) International publication number: WO 2015/169123

(56) References cited:
- EP-A1- 2 680 555
- EP-A1- 2 693 730
- EP-A1- 2 725 768
- CN-A- 103 442 344
- CN-A- 103 957 150
- CN-A- 103 973 786

## Description

The present invention relates to the field of communication technologies, and specifically to a method of synchronizing notification messages for electronic devices and electronic devices.

As multimedia electronic devices (e.g. cell phones, PDAs, personal computers, etc.) have become more popular over recent years, the number of multimedia electronic devices owned by one person at the same time becomes increasingly high. As sizes of multimedia electronic devices become increasingly large, it is impossible for one person to carry a large number of multimedia electronic devices. On the other hand, when each multimedia electronic device has more and more functions, some multimedia electronic devices are not suitable to be used as auxiliary devices to other multimedia electronic devices, except for a limited number of wearable multimedia electronic devices.

As a result, messages that one person may receive may show up on a plurality of multimedia electronic devices, while the person cannot conveniently gather and promptly know the messages. For example, when a user holds a tablet to browse webpages or make online purchases, IM (instant messages) and text messages on a cell phone cannot be viewed immediately and directly. The user must turn to the cell phone to view them. In some environments, moreover, a user may even be unable to immediately locate where his/her cell phone is. For example, the cell phone is in another room.

EP 2 680 555 A1 discloses an apparatus, system and method for call notifications to active communication devices. At an apparatus comprising a processor and a communication interface, a call for a first device is received via the communication interface. When it is determined that a second device is active, a notification of the call is transmitted to the second device. In particular, data can be stored wherein the data comprise network identifiers of second devices with are associated with the first device. The first device is enabled to process the data to transmit messages, queries and the like to the associated second devices. In some implementations, data can be used to exchange P2P (peer to peer) data and/or messages with second devices whose network identifiers are stored. However, EP 2 680 555 A1 does not disclose that a communication address list is requested by the first device and then matched with valid communication addresses by the first device. Also, EP 2 680 555 A1 does not mention determining if the active electronic device has displayed the notification message within a first preset wait period.

EP 2 693 730 A1 discloses a method of communication information transmission performed by a first device including: receiving a communication request from a second device; obtaining surrounding situation information of the first device, the surrounding situation information including information related to surroundings of the first device; and determining at least one third device to process the communication request based on the surrounding situation information.

To solve the above problems of the prior art, the object of the present invention is to provide a method of synchronizing notification messages for electronic devices and electronic devices such that a user can promptly receive notification messages.

This problem is solved according to the features of the independent claims. Further embodiments result from the depending claims.

According to one aspect of the present invention, a method of synchronizing notification messages for electronic devices is provided, comprising:
- monitoring, by an electronic device, if it has a notification message;
- if the electronic device has a notification message, determining by the electronic device, if it is on standby;
- if the electronic device has determined that it is on standby, determining, by the standby electronic device, if an active electronic device associated with the standby electronic device and having a valid communication address is present;
- if the standby electronic device has determined that the active electronic device is present, the standby electronic device sends the notification message to the active electronic device;
- if the electronic device is active, the electronic device displays the notification message;
- by the standby electronic device, timing a first preset wait period and determining if the active electronic device has displayed the notification message; if it determines that the active electronic device has displayed the notification message, it then determining if the first preset wait period has passed;
- if the standby electronic device determines that the first preset wait period has not passed, the standby electronic device receives a message that the active electronic device has displayed the notification message;
wherein the step of determining, by the standby electronic device, if an active electronic device associated with the standby electronic device and having a valid communication address is present und the step of determining, by the standby electronic device, if the active electronic device is present and sending the notification message to the active electronic device, comprises:
- the electronic device sends a request message to a management server, wherein the request message is used to request a communication address list of active electronic devices, and the request message carries a message identifier;
- the management server responds to the request message and sends the communication address list of active electronic devices to the standby electronic device according to the message identifier;
- determining, by the standby electronic device, if at least one valid communication address is present in the communication address list;
- if the standby electronic device has determined that at least one valid communication address is present, the standby electronic device sends the notification message to the active electronic device having a valid communication address.

According to an embodiment, the method further comprises: if it has determined that the first preset wait period has passed, the standby electronic device confirms that the active electronic device has not executed the operation to display the notification message.

According to an embodiment, the method further comprises:
- by the standby electronic device, timing the second preset wait period and determining if the user has viewed the notification message displayed by the active electronic device; if the standby electronic device has determined that the user has viewed the notification message displayed by the active electronic device, determining, by the standby electronic device, if the second preset wait period has passed;
- if the standby electronic device has determines that the second preset wait period has not passed, the standby electronic device receives a message that the user has viewed the notification message.

According to an embodiment, the method further comprises: if the second preset wait period has passed, the electronic device confirms that the user has not viewed the notification message.

According to an embodiment, the method further comprises: if it is determined that no valid communication address is present in the communication address list, the electronic device displays the notification message.

According to another aspect of the present invention, an electronic device is provided, comprising:
- a monitoring module configured to monitor if the electronic device has a notification message;
- a determining module configured to, if the monitoring module monitors that the electronic device has the notification message, determine if the electronic device is on standby;
- a control module configured to, if the determining module determines that the electronic device is on standby, determine if an active electronic device associated with the electronic device and having a valid communication address is present;
- a sending module configured to send a message; wherein, if the control module determines that the active electronic device is present, the sending module is configured to send the notification message to the active electronic device;
- wherein the control module is further configured to determine if at least one valid communication address is present in the communication address list; if it is determined that at least one valid communication address is present, the sending module is configured to send the notification message to the active electronic device having a valid communication address;
- a display module configured to display a message; wherein, if the determining module determines that the electronic device is active, the display module is configured to display the notification message.
- a receiving module configured to receive a message; wherein the sending module is configured to send a request message to a management server, wherein the request message is used to request a communication address list of active electronic devices, and the request message carries a message identifier; the receiving module being configured to receive a response to the request message from the management server comprising the communication address list of active electronic devices according to the message identifier;
- wherein the control module is further configured to time the first preset wait period and determine if the active electronic device has displayed the notification message; if it is determined that the active electronic device has displayed the notification message, the control module is configured to determine if the first preset wait period has passed; if it is determined that the first preset wait period has not passed, the receiving module is configured to receive a message that the active electronic device has displayed the notification message.

According to an embodiment, the control module is further configured to time a second preset wait period and determine if the user has viewed the notification message displayed by the active electronic device; if it is determined that the user has viewed the notification message displayed by the active electronic device, the control module is configured to determine if the second preset wait period has passed; if it is determined that the second preset wait period has not passed, the receiving module is configured to receive a message that the user has viewed the notification message.

According to an embodiment, if the control module determines that no valid communication address is present in the communication address list, the display module is configured to display the notification message.

According to an embodiment, if the control module determines that the first preset wait period has passed, the control module is configured to determine that the active electronic device has not executed the operation to display the notification message.

According to an embodiment, if the control module determines that the second preset wait period has passed, the control module is configured to determine that the displayed notification message has not been viewed by the user.

According to yet another aspect of the present invention, a system comprising an electronic device, a standby electronic device and a management server is provided,
the electronic device comprising:
a control module configured to determine if the electronic device is active;
a display module configured to display a message;
a receiving module configured to receive a message; and
a sending module (304) configured to send a message;
   - wherein, if the control module determines that the electronic device is active, the receiving module receives a notification message sent by a standby electronic device associated with the electronic device, the display module is configured to display the notification message; and the sending module being configured to send a message that the active electronic device has displayed the notification message to the standby electronic device;
   - wherein, if the control module has determined that the electronic device is active, the sending module is configured to send a communication address of the active electronic device to the management server;
   - the management server being configured to respond to a request message sent by the standby electronic device associated with the active electronic device, and being configured to send the communication address of the active electronic device to the standby electronic device according to a message identifier carried by the request message, wherein the request message is used to request the communication address of the active electronic device;
   - the standby electronic device being configured to determine if the communication address of the active electronic device is valid; if the standby electronic device determines that the communication address of the active electronic device is valid, the standby electronic device is configured to send the notification message to the receiving module;
      the standby electronic device being configured to time a first preset wait period and determine if the electronic device has displayed the notification message; if the standby electronic device determines that the electronic device has displayed the notification message, then the electronic device is configured to determine if the first preset wait period has passed; if the standby electronic device determines that the first preset wait period has not passed, the standby electronic device is configured to receive a message that the electronic device has displayed the notification message.

The method of synchronizing notification messages for electronic devices and electronic devices according to the present invention facilitate the gathering of notification messages such that a user can promptly receive notification messages.

The above and other aspects, features and advantages of examples of the present invention will become clearer through the description below with reference to the accompanying drawings, wherein:
- Fig.1: is a block diagram of the management server in an example according to the present invention;
- Fig.2: is a block diagram of the electronic device in an example according to the present invention;
- Fig.3: is a block diagram of the electronic device in another example according to the present invention;
- Fig.4: illustrates communications between the management server and the electronic device in the example according to the present invention;
- Fig.5: is a flow chart of the method of synchronizing notification messages for electronic devices in an example according to the present invention.

Examples of the present invention will be described in detail below with reference to the accompanying drawings. However, the present invention may be implemented in numerous different forms, and the present invention shall not be construed to be limited by specific examples set forth herein. On the contrary, the provision of these examples is to explain the principles and actual applications of the present invention, such that others skilled in the art can understand various examples and various modifications applicable for specific expected applications of the present invention.

In the accompanying drawings, the same legends are always used to represent the same components. It should be understood that, although terms such as "first," "second," and "third," may be used to describe various components herein, those components shall not be limited by these terms. These terms are used only to differentiate one component from the other component.

Electronic devices according to the examples of the present invention may include any proper type of mobile and immobile devices. Examples of immobile devices may include desktop computers, household appliances having message display or prompt functions, household electronic entertainment devices or other similar devices, while examples of mobile devices may include mobile terminals, such as video phones, mobile phones, smart phones, International Mobile Communication System 2000 (IMT-2000) terminals, WCDMA terminals, UMTS terminals, PDAs, PMPs, DMB terminals, E-books, laptops, tablets, wearable devices, digital cameras, digital photo frames, etc.

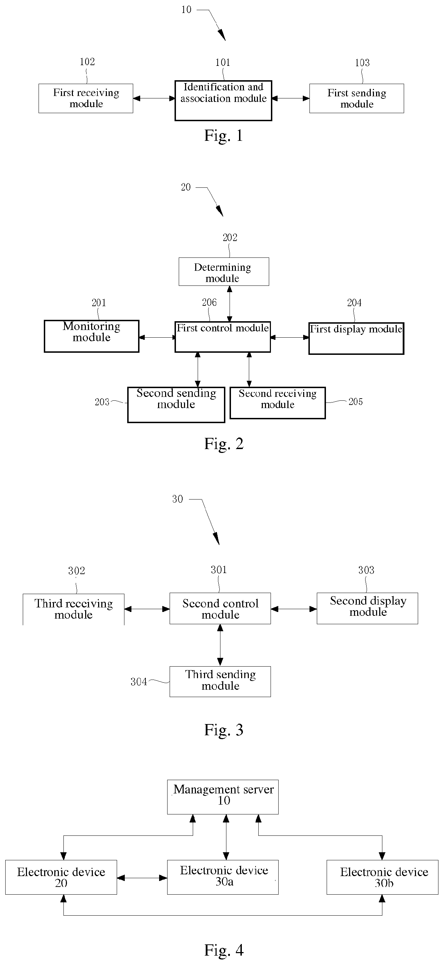

Fig.1 is a block diagram of the management server in an example according to the present invention.

As shown in Fig.1, the management server 10 according to the example of the present invention may comprise an identification and association module 101, a first receiving module 102, and a first sending module 103.

The identification and association module 101 is configured to provide services of ID management and message management for electronic devices. For example, the identification and association module 101 is configured to manage registered electronic devices, dynamic ID and status of electronic devices, etc.

Specifically, the identification and association module 101 receives registration from at least two electronic devices (e.g., the electronic device 20 in Fig.2 and the electronic device 30 in Fig.3). According to a unique identifier provided by each electronic device during registration, the identification and association module 101 associates the electronic devices that use the same unique identifier and forms an electronic device set. In other words, the identification and association module 101 associates electronic devices that use the unique identifier. Moreover, the identification and association module 101 manages and maintains a list of active electronic devices for this electronic device set. For example, according to the unique identifier provided by the electronic device 20 and the electronic device 30, the identification and association module 101 associates the electronic device 20 and the electronic device 30 that use the same unique identifier and forms an electronic device set. In other words, the identification and association module 101 associates the electronic device 20 and the electronic device 30 that use the same unique identifier.

In addition, the identification and association module 101 assigns a simplified unique identifier to each electronic device that requests registration, the simplified unique identifier being used as the ID identifier of an electronic device during communications. For example, the identification and association module 101 assigns a simplified unique identifier to each of the electronic device 20 and the electronic device 30 that request registration, wherein the simplified unique identifier may be an identifier of the same type as the unique identifier used by the electronic device during registration with the identification and association module 101, or may be an identifier of any other form and/or format that is assigned by the identification and association module 101 to an electronic device and can be identified and understood by the identification and association module 101, to which there is no specific limitation by the present invention.

In addition, the identification and association module 101 further manages an electronic device's active status (i.e. the electronic device is in a status of being operated by a user, e.g. the screen of the electronic device is turned on) and standby status (i.e. the electronic device is in a status of not being operated by a user, e.g. the screen of the electronic device is turned off). For example, when the identification and association module 101 receives an active notification message sent from the electronic device 30, the identification and association module 101 adds the communication address of the electronic device 30 into the communication address list of active electronic devices managed thereby according to the message identifier (e.g. the message identifier may be the unique identifier used by the electronic device 30 during registration with the identification and association module 101, or may be the simplified unique identifier assigned by the identification and association module 101 to the electronic device 30) carried in the active notification message. When the identification and association module 101 receives a standby notification message sent from the electronic device 30, the identification and association module 101 deletes the communication address of the electronic device 30 from the communication address list of active electronic devices managed thereby according to the message identifier (e.g. the message identifier may be the unique identifier used by the electronic device 30 during registration with the identification and association module 101, or may be the simplified unique identifier assigned by the identification and association module 101 to the electronic device 30) carried in the standby notification message.

The first receiving module 102 may be configured to receive a message. For example, when the electronic device 20 determines that it is in a standby status itself, the first receiving module 102 may be used to receive a request message submitted by the standby electronic device 20, wherein the request message is used to request the communication address list of active electronic devices managed by the identification and association module 101, and the request message carries the message identifier (for example, the message identifier may be the unique identifier used by the electronic device 20 during registration with the identification and association module 101, or may be the simplified unique identifier assigned by the identification and association module 101 to the electronic device 20).

The first sending module 103 may be used to send a message. For example, when the first receiving module 102 receives the request message submitted by the standby electronic device 20, the first sending module 103 responds to the request message submitted by the standby electronic device 20, and sends the communication address list of active electronic devices managed by the identification and association module 101 to the standby electronic device 20 according to the message identifier carried by the request message.

The electronic device 20 and the electronic device 30 of the example according to the present invention will be described in detail below with reference to Fig.2 and Fig.3, respectively.

Fig.2 is a block diagram of the electronic device 20 in an example according to the present invention.

Referring to Fig.2, the electronic device 20 of the example according to the present invention may comprise a monitoring module 201, a determining module 202, a second sending module 203, a first display module 204, a second receiving module 205 and a first control module 206.

First, the first control module 206 uses the unique identifier (e.g. a device identifier) of the electronic device 20 to register with the identification and association module 101 (as shown in Fig.1) so as to obtain the simplified unique identifier assigned by the identification and association module 101. Moreover, the identification and association module 101 associates the electronic device 20 and other electronic devices (e.g. the electronic device 30 uses the unique identifier shown in Fig.3) that use the same unique identifier and forms an electronic device set. In other words, the identification and association module 101 associates the electronic device 20 and other electronic devices that use the same unique identifier. In addition, the identification and association module 101 assigns a simplified unique identifier to the electronic device 20 that requests registration, the simplified unique identifier being used as the ID identifier of the electronic device 20 during communications, wherein the simplified unique identifier may be an identifier of the same type as the unique identifier used by the electronic device 20 during registration with the identification and association module 101, or may be an identifier of any other form and/or format that is assigned by the identification and association module 101 to the electronic device 20 and can be identified and understood by the identification and association module 101, to which there is no specific limitation by the present invention.

In addition, when the first display module 204 is in an active status (e.g., the first display module 204 may be a touchscreen, and its active status may be a status that the touchscreen is turned on or being touched, or a status that other components with human-machine interaction functions on the electronic device 20 are working, or a status that other screens connected with the electronic device 20 in a physical or wireless way are turned on or being used), the second sending module 203 sends the active notification message to the identification and association module 101, the identification and association module 101 adds the communication address of the electronic device 20 into the communication address list of active electronic devices managed thereby according to the message identifier (e.g. the message identifier may be the unique identifier used by the electronic device 20 during registration with the identification and association module 101, or may be the simplified unique identifier assigned by the identification and association module 101 to the electronic device 20) carried in the active notification message. When the first display module 204 is in a standby status (e.g., a status such as the screen is turned off), the second sending module 203 sends the standby notification message to the identification and association module 101, the identification and association module 101 deletes the communication address of the electronic device 20 from the communication address list of active electronic devices managed thereby according to the message identifier (e.g. the message identifier may be the unique identifier used by the electronic device 20 during registration with the first control module 101, or may be the simplified unique identifier assigned by the identification and association module 101 to the electronic device 20) carried in the standby notification message.

The monitoring module 201 is configured to monitor if the electronic device 20 has a notification message. The notification message herein may be, for example, a call reminder, an IM (instant message), a text message, a message prompt from an auxiliary device, a call prompt from other devices, a message of electronic device status alarm or a message of electronic device application prompt, etc. If the monitoring module 201 monitors that the electronic device 20 has the notification message, the determining module 202 determines if the first display module 204 is in a standby status.

The first display module 204 is configured to display a message. For example, if the determining module 202 determines that the first display module 204 is in an active status, the first display module 204 displays the notification message.

If the determining module 202 determines if the first display module 204 is in a standby status, the first control module 206 determines if an active electronic device associated with the electronic device 20 and having a valid communication address is present.

The second sending module 203 is configured to display a message. If the first control module 206 determines that an active electronic device associated with the electronic device 20 and having a valid communication address is present, the second sending module 203 sends the notification message to the active electronic device associated with the electronic device 20 and having a valid communication address.

The first control module 206 and the second sending module 203 above will be described in detail below, respectively.

Furthermore, the second sending module 203 sends a request message to the first receiving module 102 (as shown in Fig.1), wherein the request message is used to request a communication address list of associated active electronic devices, and the request message carries a message identifier (for example, the message identifier may be the unique identifier used by the electronic device 20 during registration with the identification and association module 101, or may be the simplified unique identifier assigned by the identification and association module 101 to the electronic device 20). The first sending module 103 (as shown in Fig.1) responds to the request message, and sends the communication address list of active electronic devices to the second receiving module 205 according to the message identifier.

Furthermore, the first control module 206 determines if at least one valid communication address is present in the communication address list; if the first control module 206 determines that at least one valid communication address is present in the communication address list, the second sending module 203 sends the notification message to the active electronic device having a valid communication address. In other words, the second sending module 203 sends the notification message to an active electronic device having a valid communication address and associated with the electronic device.

In addition, if the first control module 206 determines that no valid communication address is present in the communication address list, the first display module 204 displays the notification message.

The first control module 206 times a first preset wait period and determines if the active electronic device has displayed the notification message. If the first control module 206 determines that the active electronic device has displayed the notification message, then the first control module 206 determines if the first preset wait period has passed. If the first control module 206 determines that the first preset wait period has not passed, the second receiving module 205 receives a message that the active electronic device has displayed the notification message. In other words, if the first control module 206 determines that the first preset wait period has not passed, the first control module 206 determines that the active electronic device has executed the operation to display the notification message.

In addition, if the first control module 206 determines that the first preset wait period has passed, the second receiving module 205 receives a message that the active electronic device has not displayed the notification message. In other words, if the first control module 206 determines that the first preset wait period has passed, the first control module 206 determines that the active electronic device has not executed the operation to display the notification message. Subsequently, the first display module 204 displays the notification message.

The first control module 206 times the second preset wait period and determines if the user has viewed the notification message displayed by the active electronic device. If the first control module 206 determines that the user has viewed the notification message displayed by the active electronic device, the first control module 206 determines if the second preset wait period has passed. If the first control module 206 determines that the second preset wait period has not passed, the second receiving module 205 receives a message that the user has viewed the notification message.

In addition, if the first control module 206 determines that the second preset wait period has passed, the first control module 206 determines that the user has not viewed the notification message displayed by the active electronic device. In other words, if the first control module 206 determines that the second preset wait period has passed, the first control module 206 determines that the user has not viewed the notification message displayed by the active electronic device regardless whether the second receiving module 205 receives or does not receive a message that the displayed notification message has been viewed by the user. Moreover, when the user views the notification message displayed on the active electronic device at a future time (e.g. a time after the second preset wait period), the second receiving module 205 will receive a message that the user has viewed the notification message.

Fig.3 is a block diagram of the electronic device 30 in another example according to the present invention.

Referring to Fig.3, the electronic device 30 in another example according to the present invention may comprise a second control module 301, a third receiving module 302, a second display module 303 and a third sending module 304.

First, the second control module 301 uses the unique identifier (e.g. a device identifier) of the electronic device 30 to register with the identification and association module 101 (as shown in Fig.1) so as to obtain the simplified unique identifier assigned by the identification and association module 101. Moreover, the identification and association module 101 associates the electronic device 30 and other electronic devices (e.g. the electronic device 20 uses the unique identifier shown in Fig.2) that use the same unique identifier and forms an electronic device set. In other words, the identification and association module 101 associates the electronic device 30 and other electronic devices that use the same unique identifier. In addition, the identification and association module 101 assigns a simplified unique identifier to the electronic device 30 that requests registration, the simplified unique identifier being used as the ID identifier of the electronic device 30 during communications, wherein the simplified unique identifier may be an identifier of the same type as the unique identifier used by the electronic device 30 during registration with the identification and association module 101, or may be an identifier of any other form and/or format that is assigned by the identification and association module 101 to the electronic device 30 and can be identified and understood by the identification and association module 101, to which there is no specific limitation by the present invention.

In addition, when the second display module 303 is in an active status (e.g., the second display module 303 may be a touchscreen, and its active status may be a status that the touchscreen is turned on or being touched, or a status that other components with human-machine interaction functions on the electronic device 30 are working), the third sending module 304 sends the active notification message to the identification and association module 101, the identification and association module 101 adds the communication address of the electronic device 30 into the communication address list of active electronic devices managed thereby according to the message identifier (e.g. the message identifier may be the unique identifier used by the electronic device 30 during registration with the identification and association module 101, or may be the simplified unique identifier assigned by the identification and association module 101 to the electronic device 30) carried in the active notification message. When the second display module 303 is in a standby status (e.g., a status such as the screen is turned off), the third sending module 304 sends the standby notification message to the identification and association module 101, the identification and association module 101 deletes the communication address of the electronic device 30 from the communication address list of active electronic devices managed thereby according to the message identifier (e.g. the message identifier may be the unique identifier used by the electronic device 30 during registration with the first control module 101, or may be the simplified unique identifier assigned by the identification and association module 101 to the electronic device 30) carried in the standby notification message.

The second control module 301 is configured to determine if the second display module 303 is in an active status. The third receiving module 302 is configured to receive a message. The second display module 303 is configured to display a message. The third sending module 304 is configured to send a message.

Specifically, if the second control module 301 determines that the second display module 303 is in an active status, the third sending module 304 sends the communication address of the electronic device 30 to the identification and association module 101. The first sending module 103 responds to the request message sent by a standby electronic device associated with the electronic device 30, and sends the communication address of the electronic device 30 to the standby electronic device according to the message identifier (e.g. the message identifier may be the unique identifier used by the standby electronic device during registration with the identification and association module 101, or may be the simplified unique identifier assigned by the identification and association module 101 to the standby electronic device) carried by the request message, wherein the request message is used to request a communication address of the active electronic device. The standby electronic device determines if the communication address of the electronic device 30 is valid; if the standby electronic device determines that the communication address of the electronic device 30 is valid, the standby electronic device sends the notification message to the third receiving module 302. In other words, if the second control module 301 determines that the second display module 303 is in an active status, the third receiving module 302 receives the notification message sent by the standby electronic device associated with the electronic device 30, and the second display module 303 may display the notification message.

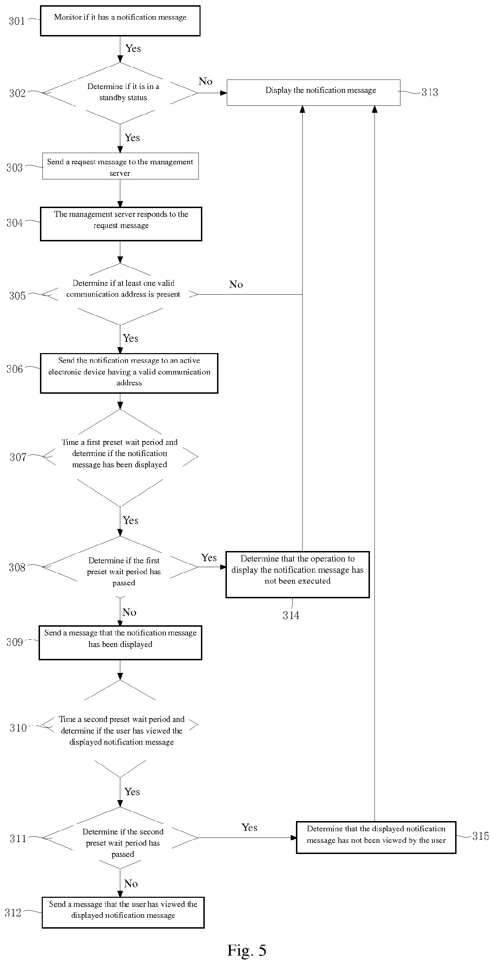

Fig.4 illustrates communications between the management server and the electronic device in the example according to the present invention. Fig.5 is a flow chart of the method of synchronizing notification messages for electronic devices in an example according to the present invention.

Referring to Fig.1 through Fig.5, the synchronization of notification messages for electronic devices in the example according to the present invention is carried out among the management server 10, the electronic device 20, the electronic device 30a and the electronic device 30b, wherein the electronic device 30a and the electronic device 30b have the same configuration as that of the above electronic device 30.

However, it should be understood that the synchronization of notification messages for electronic devices according to the present invention may be carried out among the management server 10, at least one electronic device 20 and at least one electronic device 30, or may be carried out among the management server 10 and at least two electronic devices 20. In the present invention, in addition, the server management 10 may also be placed inside an electronic device. For example, the management server 10 may be placed inside the electronic device 20, the electronic device 30a or the electronic device 30b.

First, the electronic device 20, the electronic device 30a and the electronic device 30b use the unique identifier (e.g. a device identifier) of their own, respectively, to register with the identification and association module 101 (as shown in Fig.1) so as to obtain the simplified unique identifier assigned by the identification and association module 101. In such a way, the identification and association module 101 associates the electronic device 20, the electronic device 30a and the electronic device 30b that use the same unique identifier and forms an electronic device set. In addition, the simplified unique identifier is used as the ID identifier of each electronic device during communications. The simplified unique identifier herein may be an identifier of the same type as the unique identifier used by each electronic device during registration with the identification and association module 101, or may be an identifier of any other form and/or format that is assigned by the identification and association module 101 to each electronic device and can be identified and understood by the identification and association module 101, to which there is no specific limitation by the present invention.

Secondly, in the present example, when the second display module 303 of the electronic device 30a or the electronic device 30b is in an active status (e.g., the second display module 303 may be a touchscreen, and its active status may be a status that the touchscreen is turned on or being touched, or a status that other components with human-machine interaction functions on the electronic device 30 are working), the third sending module 304 of the electronic device 30a or the electronic device 30b sends the active notification message to the identification and association module 101, the identification and association module 101 adds the communication address of the electronic device 30a or the electronic device 30b into the communication address list of active electronic devices managed thereby according to the message identifier (e.g. the message identifier may be the unique identifier used by the electronic device 30a or the electronic device 30b during registration with the identification and association module 101, or may be the simplified unique identifier assigned by the identification and association module 101 to the electronic device 30a or the electronic device 30b) carried in the active notification message. When the second display module 303 of the electronic device 30a or the electronic device 30b is in a standby status (e.g., a status such as the screen is turned off), the third sending module 304 of the electronic device 30a or the electronic device 30b sends the standby notification message to the identification and association module 101, the identification and association module 101 deletes the communication address of the electronic device 30a or the electronic device 30b from the communication address list of active electronic devices managed thereby according to the message identifier (e.g. the message identifier may be the unique identifier used by the electronic device 30a or the electronic device 30b during registration with the first control module 101, or may be the simplified unique identifier assigned by the identification and association module 101 to the electronic device 30a or the electronic device 30b) carried in the standby notification message.

In the Operation 301, the monitoring module 201 monitors if the electronic device 20 has a notification message. If the monitoring module 201 monitors that the electronic device 20 has a notification message, go to the Operation 302. In the Operation 302, the determining module 202 determines if the first display module 204 is in a standby status. The notification message herein may be, for example, a call reminder, an IM (instant message), a text message, a message prompt from an auxiliary device, a call prompt from other devices, a message of electronic device status alarm or a message of electronic device application prompt, etc. If the determining module 202 of the electronic device 20 determines that the first display module 204 is in an active status, go to the Operation 313. In the Operation 313, the first display module 204 of the electronic device 20 displays the notification message.

If the determining module 202 determines that the first display module 204 is in a standby status, go to the Operation 303. In the Operation 303, the second sending module 203 sends a request message to the first receiving module 102 of the management server 10, wherein the request message is used to request a communication address list of active electronic devices managed by the identification and association module 101 (e.g. the active electronic device 30a and electronic device 30b of the second display module 303), and the request message carries a message identifier (for example, the message identifier may be the unique identifier used by the electronic device 20 during registration with the identification and association module 101, or may be the simplified unique identifier assigned by the identification and association module 101 to the electronic device 20).

Subsequently in the Operation 304, the first sending module 102 of the management server 10 responds to the request message, and returns the communication address list composed of the communication addresses of the active electronic device 30a and electronic device 30b of the second display module 303 in the electronic device set 2030 to the second receiving module 205 of the electronic device 20 according to the message identifier carried by the request message.

Subsequently in the Operation 305, the first control module 206 of the electronic device 20 determines if at least one valid communication address is present in the communication address list. If the first control module 206 of the electronic device 20 determines that at least one valid communication address of a device other than the device itself is present, go to the Operation 306. In the present example, the first control module 206 of the electronic device 20 determines that all communication addresses of the electronic device 30a are valid.

In the Operation 306, the second sending module 203 of the electronic device 20 sends the notification message to the second receiving module 201 of the electronic device 30a. In the Operation 306, in other words, the second sending module 203 sends the notification message to the active electronic device 30a associated with the electronic device 20 and having a valid communication address. In the Operation 305, moreover, if the first control module 206 of the electronic device 20 determines that no valid communication address is present in the communication address list, then none of communication addresses of the electronic device 30a and the electronic device 30b are valid; go to the Operation 313.

Subsequently in the Operation 307, the first control module 206 of the electronic device 20 times a first preset wait period and determines if the second display module 303 of the electronic device 30a has displayed the notification message. If the first control module 206 of the electronic device 20 determines that the second display module 303 of the electronic device 30a has displayed the notification message, then go to the Operation 308.

In the Operation 308, the first control module 206 of the electronic device 20 determines if the first preset wait period has passed. If the first control module 206 of the electronic device 20 determines that the first preset wait period has not passed, go to the Operation 309.

In the Operation 309, the third sending module 304 of the electronic device 30a sends the message that the second display module 303 has displayed the notification message to the second receiving module 205 of the electronic device 20. In other words, if the first control module 206 determines that the first preset wait period has not passed, the first control module 206 determines that the electronic device 30a has executed the operation to display the notification message.

If the first control module 206 of the electronic device 20 determines that the first preset wait period has passed, go to the Operation 314. In the Operation 314, the third sending module 304 of the electronic device 30a sends the message that the second display module 303 has not displayed the notification message to the second receiving module 205 of the electronic device 20. In other words, if the first control module 206 of the electronic device 20 determines that the first preset wait period has passed, the first control module 206 of the electronic device 20 determines that the second display module 303 of the electronic device 30a has not executed the operation to display the notification message, and then go to the Operation 313.

Subsequently in the Operation 310, the first control module 206 of the electronic device 20 times a second preset wait period and determines if the user has viewed the notification message displayed by the second display module 303 of the electronic device 30a. If the first control module 206 of the electronic device 20 determines that the user has viewed the notification message displayed by the second display module 303 of the electronic device 30a, then go to the Operation 311.

In the Operation 311, the first control module 206 of the electronic device 20 determines if the second preset wait period has passed. If the first control module 206 of the electronic device 20 determines that the second preset wait period has not passed, then go to the Operation 312.

In the Operation 312, the third sending module 304 of the electronic device 30a sends the message that the user has viewed the notification message to the second receiving module 205 of the electronic device 20.

In the Operation 311, moreover, if the first control module 206 of the electronic device 20 determines that the second preset wait period has passed, then go to the Operation 315. In the Operation 315, the first control module 206 of the electronic device 20 determines that the user has not viewed the notification message displayed by the second display module 303 of the electronic device 30a. In other words, if the first control module 206 of the electronic device 20 determines that the second preset wait period has passed, the first control module 206 determines that the user has not viewed the notification message displayed by the second display module 303 of the electronic device 30a regardless whether the second receiving module 205 of the electronic device 20 receives or does not receive a message that the notification message displayed by the second display module 303 of the electronic device 30a has been viewed by the user, and then go to the Operation 313.

Moreover, when the user views the notification message displayed on the second display module 303 of the electronic device 30a at a future time (e.g. a time after the second preset wait period), the third sending module 304 of the electronic device 30a may send the message that the user has viewed the notification message to the second receiving module 205 of the electronic device 20.

The method provided for Fig.5 is only an example. At least some operations of the method may be carried out simultaneously, in a different order or completed omitted.

The above content of the present invention may be implemented by means of hardware or firmware, or may be implemented through running software or computer codes stored in a memory medium (such as a CD-ROM, DVD, magnetic tape, RAM, floppy disk, hard disk or magnetic optic disk) or computer codes that are originally stored in a remote memory medium or non-transient machine readable medium and downloaded through a network so as to be stored in a local memory medium, which enables the implementation of the method described herein by a general purpose computer or a dedicated processor or software stored in a memory medium using a programmable or dedicated hardware (such as ASIC or FPGA). As it is understood in the art, the computer, processor, microprocessor controller or programmable hardware comprises a memory part that can store or receive software or computer codes, for example, RAM, ROM and flash memory, etc., wherein when the computer, processor or hardware accesses and runs the software or computer codes, the software or computer codes will implement the method described herein. In addition, it should be noted that when a general purpose computer accesses the codes for implementing the processes shown herein, the operations of the codes convert the general purpose computer to a dedicated computer for executing the processes shown herein. Any function or step provided in the accompanying drawings may be implemented by means of hardware, software or a combination of the two, and may be executed, in full or in part, within programmable commands of the computer.

## Claims

1. A method of synchronizing notification messages for electronic devices (20, 30a, 30b), comprising:
- monitoring, by an electronic device (20), if it has a notification message (301);
- if the electronic device (20) has the notification message, determining, by the electronic device (20), if it is on standby (302);
- if the electronic device (20) is determined to be on standby, determining, by the standby electronic device (20), if an active electronic device (30a) associated with the standby electronic device (20) and having a valid communication address is present (303-305);
- if the standby electronic device (20) determines that the active electronic device (30a) is present, the standby electronic device (20) sends the notification message to the active electronic device (306);
- if the electronic device (20) is active, the electronic device (20) displays the received notification message (313);
- by the standby electronic device (20), timing a first preset wait period and determining if the active electronic (30a) device has displayed the notification message (307);
- if the standby electronic device (20) determines that the active electronic device (30a) has displayed the notification message, then the active electronic device (30a) is configured to determine if the first preset wait period has passed (308);
- if the standby electronic device (20) determines that the first preset wait period has not passed, the standby electronic device (20) receives a message that the active electronic device (30a) has displayed the notification message, wherein the step of determining, by the standby electronic device (20), if the active electronic device (30a) associated with the standby electronic device (20) and having a valid communication address is present (303-305) and the step of determining, by the standby electronic device (20), that the active electronic device is present and sending, by the standby electronic device, the notification message to the active electronic device (306) comprises:
- the electronic device (20) sends a request message to a management server (10) (303), wherein the request message is used to request a communication address list of active electronic devices (30a), and the request message carries a message identifier;
- the management server (10) responds to the request message (304) and sends the communication address list of active electronic devices to the standby electronic device (20) according to the message identifier;
- determining, by the standby electronic device (20), if at least one valid communication address is present in the communication address list (305);
- if it is determined by the standby electronic device (20) that at least one valid communication address is present, the standby electronic device (20) sends the notification message to the active electronic device (30a) having a valid communication address (306).

2. The method according to claim 1, further comprising: if it determines that the first preset wait period has passed (308), the standby electronic device (20) confirms that the active electronic device (30a) has not executed the operation to display the notification message (314).

3. The method according to any of the preceding claims, further comprising:
- by the standby electronic device (20), timing a second preset wait period and determining if the user has viewed the notification message displayed by the active electronic device (310); if the standby electronic device (20) determines that the user has viewed the notification message displayed by the active electronic device (30a), determining, by the standby electronic device (20), if the second preset wait period has passed;
- if the standby electronic device (20) determines that the second preset wait period has not passed, the standby electronic device (20) receives a message that the user has viewed the notification message (312).

4. The method according to claim 3, further comprising: if the second preset wait period has passed, the standby electronic device (20) confirms that the user has not viewed the notification message (315).

5. The method according to any of the preceding claims, further comprising: if it is determined that no valid communication address is present in the communication address list (305), the standby electronic device (20) displays the notification message (313).

6. An electronic device (20), comprising:
- a monitoring module (201) configured to monitor if the electronic device has a notification message;
- a determining module (202) configured to, if the monitoring module monitors that the electronic device has the notification message, determine if the electronic device is on standby;
- a control module (206) configured to, if the determining module determines that the electronic device is on standby, determine if an active electronic device (30a) associated with the electronic device and having a valid communication address is present;
- a sending module (203) configured to send a message;
- wherein, if the control module (206) determines that the active electronic device is present, the sending module (203) is configured to send the notification message to the active electronic device (30a);
- wherein the control module (206) is further configured to determine if at least one valid communication address is present in the communication address list; if it is determined that at least one valid communication address is present, the sending module (203) is configured to send the notification message to the active electronic device having a valid communication address;
the electronic device (20) further comprising:
- a display module (204) configured to display a message; wherein, if the determining module (202) determines that the electronic device (20) is active, the display module is configured to display the notification message;
- a receiving module (206) configured to receive a message; wherein the sending module (203) is configured to send a request message to a management server (10), wherein the request message is used to request a communication address list of active electronic devices (30a), and the request message carries a message identifier; the receiving module (205) being configured to receive a response to the request message from the management server (10) comprising the communication address list of active electronic devices according to the message identifier;
wherein the control module (206) is further configured to time a first preset wait period and determine if the active electronic device (30a) has displayed the notification message; if it is determined that the active electronic device has displayed the notification message, the control module (206) is configured to determine if the first preset wait period has passed; if it is determined that the first preset wait period has not passed, the receiving module (205) is configured to receive a message that the active electronic device has displayed the notification message.

7. The electronic device (20) according to claim 6, wherein the control module (206) is further configured to time a second preset wait period and determine if the user has viewed the notification message displayed by the active electronic device (30a); if it is determined that the user has viewed the notification message displayed by the active electronic device, the control module (206) is configured to determine if the second preset wait period has passed; if it is determined that the second preset wait period has not passed, the receiving module (205) is configured to receive a message that the user has viewed the notification message.

8. The electronic device (20) according to any of the claims 6 to 7, wherein, if the control module determines (206) that no valid communication address is present in the communication address list, the display module (204) is configured to display the notification message.

9. The electronic device (20) according to any of the claims 6 to 8, wherein, if the control module (206) determines that the first preset wait period has passed, the control module is configured to determine that the active electronic device (30a) has not executed the operation to display the notification message.

10. The electronic device (20) according to claim 7, wherein, if the control module (206) determines that the second preset wait period has passed, the control module is configured to determine that the displayed notification message has not been viewed by the user.

11. A system (10, 20, 30a, 30b) comprising an electronic device (30a, 30b), a standby electronic device (20) and a management server (10),
- the electronic device (30a, 30b) comprising:
a control module (301) configured to determine if the electronic device (30a) is active;
a display module (303) configured to display a message;
a receiving module (302) configured to receive a message; and
a sending module (304) configured to send a message,
- wherein, if the control module (301) determines that the electronic device (30a) is active and the receiving module (302) receives a notification message sent by the standby electronic device (20) associated with the electronic device (30a, 30b), the display module (303) is configured to display the notification message, and the sending module (304) being configured to send a message that the active electronic device (30a, 30b) has displayed the notification message to the standby electronic device (20);
- wherein, if the control module (301) has determined that the electronic device (30a) is active, the sending module (304) is configured to send a communication address of the active electronic device (30a) to the management server (10);
- the management server (10) being configured to respond to a request message sent by the standby electronic device (20) associated with the active electronic device (30a), and being configured to send the communication address of the active electronic device (30a) to the standby electronic device (20) according to a message identifier carried by the request message, wherein the request message is used to request the communication address of the active electronic device (30a);
- the standby electronic device (20) being configured to determine if the communication address of the active electronic device (30a) is valid; if the standby electronic device (20) determines that the communication address of the active electronic device (30a) is valid, the standby electronic device (20) is configured to send the notification message to the receiving module (302);
the standby electronic device being configured to time a first preset wait period and determine if the electronic device has displayed the notification message; if the standby electronic device determines that the electronic device has displayed the notification message, then the electronic device is configured to determine if the first preset wait period has passed; if the standby electronic device determines that the first preset wait period has not passed, the standby electronic device is configured to receive a message that the electronic device has displayed the notification message.

## Patentansprüche

1. Verfahren zum Synchronisieren von Benachrichtigungsmeldungen für elektronische Vorrichtungen (20, 30a, 30b), das Folgendes umfasst:
- Überwachen durch eine elektronische Vorrichtung (20), ob sie eine Benachrichtigungsmeldung empfangen hat (301);
- Bestimmen durch die elektronische Vorrichtung (20) dann, wenn die elektronische Vorrichtung (20) die Benachrichtigungsmeldung empfangen hat, ob sie im Standby ist (302);
- Bestimmen durch die elektronische Vorrichtung (20) dann, wenn bestimmt wird, dass die elektronische Vorrichtung (20) im Standby ist, ob eine aktive elektronische Vorrichtung (30a), die der im Standby befindlichen elektronischen Vorrichtung (20) zugeordnet ist und eine gültige Kommunikationsadresse besitzt, vorhanden ist (303-305); wobei
- die im Standby befindliche elektronische Vorrichtung (20) dann, wenn die im Standby befindliche elektronische Vorrichtung (20) bestimmt, dass die aktive elektronische Vorrichtung (30a) vorhanden ist, die Benachrichtigungsmeldung an die aktive elektronischen Vorrichtung sendet (306); und
- die elektronische Vorrichtung (20) dann, wenn die elektronische Vorrichtung (20) aktiv ist, die empfangene Benachrichtigungsmeldung anzeigt (313); und
- zeitliches Festlegen durch die im Standby befindliche elektronische Vorrichtung (20) eines ersten voreingestellten Wartezeitraums und Bestimmen, ob die aktive elektronische Vorrichtung (30a) die Benachrichtigungsmeldung angezeigt hat (307); wobei
- die aktive elektronische Vorrichtung (30a) konfiguriert ist, dann, wenn die im Standby befindliche elektronische Vorrichtung (20) bestimmt, dass die aktive elektronische Vorrichtung (30a) die Benachrichtigungsmeldung angezeigt hat, zu bestimmen, ob der erste voreingestellte Wartezeitraum verstrichen ist (308); und
- die in Bereitschaft befindliche elektronische Vorrichtung (20) dann, wenn die elektronische Vorrichtung (20) bestimmt, dass der erste voreingestellte Wartezeitraum nicht verstrichen ist, eine Meldung empfängt, dass die aktive elektronische Vorrichtung (30a) die Benachrichtigungsmeldung angezeigt hat, wobei
der Schritt des Bestimmens durch die im Standby befindliche elektronische Vorrichtung (20), ob die aktive elektronische Vorrichtung (30a), die der im Standby befindlichen elektronischen Vorrichtung (20) zugeordnet ist und eine gültige Kommunikationsadresse besitzt, vorhanden ist (303-305), und der Schritt des Bestimmens durch die im Standby befindliche elektronische Vorrichtung (20), dass die aktive elektronische Vorrichtung vorhanden ist, und des Sendens durch die in Bereitschaft befindliche elektronische Vorrichtung der Benachrichtigungsmeldung zur aktiven elektronischen Vorrichtung (306) Folgendes umfassen:
- die elektronische Vorrichtung (20) sendet eine Anforderungsmeldung zu einem Management-Server (10) (303), wobei die Anforderungsmeldung verwendet wird, eine Kommunikationsadressenliste aktiver elektronischer Vorrichtungen (30a) anzufordern, und die Anforderungsmeldung eine Meldungskennung führt;
- der Management-Server (10) antwortet auf die Anforderungsmeldung (304) und sendet die Kommunikationsadressenliste aktiver elektronischer Vorrichtungen gemäß der Meldungskennung zur im Standby befindlichen elektronischen Vorrichtung (20); und
- Bestimmen durch die im Standby befindliche elektronische Vorrichtung (20), ob mindestens eine gültige Kommunikationsadresse in der Kommunikationsadressenliste vorhanden ist (305); wobei
- die in Bereitschaft befindliche elektronische Vorrichtung (20) dann, wenn durch die im Standby befindliche elektronische Vorrichtung (20) bestimmt wird, dass mindestens eine gültige Kommunikationsadresse vorhanden ist, die Benachrichtigungsmeldung zur aktiven elektronischen Vorrichtung (30a), die eine gültige Kommunikationsadresse besitzt, sendet (306).

2. Verfahren nach Anspruch 1, das ferner Folgendes umfasst: die im Standby befindliche elektronische Vorrichtung (20) bestätigt dann, wenn sie bestimmt, dass der erste Wartezeitraum verstrichen ist (308), dass die aktive elektronische Vorrichtung (30a) die Operation zum Anzeigen der Benachrichtigungsmeldung nicht ausgeführt hat (314).

3. Verfahren nach einem der vorhergehenden Ansprüche, das ferner Folgendes umfasst:
- zeitliches Festlegen durch die im Standby befindliche elektronische Vorrichtung (20) eines zweiten voreingestellten Wartezeitraums und Bestimmen, ob der Anwender die Benachrichtigungsmeldung, die durch die aktive elektronische Vorrichtung angezeigt wird, betrachtet hat (310); und Bestimmen durch die im Standby befindliche elektronische Vorrichtung (20) dann, wenn die im Standby befindliche elektronische Vorrichtung (20) bestimmt, dass der Anwender die Benachrichtigungsmeldung, die durch die aktive elektronische Vorrichtung (30a) angezeigt wird, betrachtet hat, ob der zweite voreingestellte Wartezeitraum verstrichen ist; wobei
- die im Standby befindliche elektronische Vorrichtung (20) dann, wenn die im Standby befindliche elektronische Vorrichtung (20) bestimmt, dass der zweite voreingestellte Wartezeitraum nicht verstrichen ist, eine Meldung empfängt, dass der Anwender die Benachrichtigungsmeldung betrachtet hat (312).

4. Verfahren nach Anspruch 3, das ferner Folgendes umfasst: die im Standby befindliche elektronische Vorrichtung (20) bestätigt dann, wenn der zweite voreingestellte Wartezeitraum verstrichen ist, dass der Anwender die Benachrichtigungsmeldung nicht betrachtet hat (315).

5. Verfahren nach einem der vorhergehenden Ansprüche, das ferner Folgendes umfasst: die im Standby befindliche elektronische Vorrichtung (20) zeigt dann, wenn bestimmt wird, dass keine gültige Kommunikationsadresse in der Kommunikationsadressenliste vorhanden ist (305), die Benachrichtigungsmeldung an (313).

6. Elektronische Vorrichtung (20), die Folgendes umfasst:
- ein Überwachungsmodul (201), das konfiguriert ist zum Beobachten, ob die elektronische Vorrichtung eine Benachrichtigungsmeldung besitzt;
- ein Bestimmungsmodul (202), das konfiguriert ist zum Bestimmen dann, wenn das Überwachungsmodul erkennt, dass die elektronische Vorrichtung die Benachrichtigungsmeldung erhalten hat, ob die elektronische Vorrichtung in Bereitschaft ist;
- ein Steuermodul (206), das konfiguriert ist zum Bestimmen dann, wenn das Bestimmungsmodul bestimmt, dass die elektronische Vorrichtung sich im Standby befindet, ob eine aktive elektronische Vorrichtung (30a), die der elektronischen Vorrichtung zugeordnet ist und eine gültige Kommunikationsadresse besitzt, vorhanden ist; und
- ein Sendemodul (203), das konfiguriert ist zum Senden einer Meldung; wobei
- das Sendemodul (203) konfiguriert ist, dann, wenn das Steuermodul (206) bestimmt, dass die aktive elektronische Vorrichtung vorhanden ist, die Benachrichtigungsmeldung zur aktiven elektronischen Vorrichtung (30a) zu senden; und
- das Steuermodul (206) ferner konfiguriert ist, zu bestimmen, ob mindestens eine gültige Kommunikationsadresse in der Kommunikationsadressenliste vorhanden ist; das Sendemodul (203) konfiguriert ist, dann, wenn bestimmt wird, dass mindestens eine gültige Kommunikationsadresse vorhanden ist, die Benachrichtigungsmeldung zur aktiven elektronischen Vorrichtung, die eine gültige Kommunikationsadresse besitzt, zu senden; wobei
die elektronische Vorrichtung (20) ferner Folgendes umfasst:
- ein Anzeigemodul (204), das konfiguriert ist zum Anzeigen einer Meldung; wobei das Anzeigemodul konfiguriert ist, dann, wenn das Bestimmungsmodul (202) bestimmt, dass die elektronische Vorrichtung (20) aktiv ist, die Benachrichtigungsmeldung anzuzeigen; und
- ein Empfangsmodul (206), das konfiguriert ist zum Empfangen einer Meldung; wobei das das Sendemodul (203) konfiguriert ist, eine Anforderungsmeldung zu einem Management-Server (10) zu senden, wobei die Anforderungsmeldung verwendet wird, eine Kommunikationsadressenliste aktiver elektronischer Vorrichtungen (30a) anzufordern, und die Anforderungsmeldung eine Meldungskennung führt; und wobei das Empfangsmodul (205) konfiguriert ist, eine Antwort auf die angeforderte Meldung, die die Kommunikationsadressenliste aktiver elektronischer Vorrichtungen gemäß der Meldungskennung umfasst, vom Management-Server (10) zu empfangen; wobei
das Steuermodul (206) ferner konfiguriert ist, einen ersten voreingestellten Wartezeitraum zeitlich festzulegen und zu bestimmen, ob die aktive elektronische Vorrichtung (30a) die Benachrichtigungsmeldung angezeigt hat; das Steuermodul (206) konfiguriert ist, dann, wenn bestimmt wird, dass die aktive elektronische Vorrichtung die Benachrichtigungsmeldung angezeigt hat, zu bestimmen, ob der erste voreingestellte Wartezeitraum verstrichen ist; und das Empfangsmodul (205) konfiguriert ist, dann, wenn bestimmt wird, dass der erste voreingestellte Wartezeitraum nicht verstrichen ist, eine Meldung zu empfangen, dass die aktive elektronische Vorrichtung die Benachrichtigungsmeldung angezeigt hat.

7. Elektronische Vorrichtung (20) nach Anspruch 6, wobei das Steuermodul (206) ferner konfiguriert ist, einen zweiten voreingestellten Wartezeitraum zeitlich festzulegen und zu bestimmen, ob der Anwender die Benachrichtigungsmeldung, die durch die aktive elektronische Vorrichtung (30a) angezeigt wird, betrachtet hat; das Steuermodul (206) konfiguriert ist, dann, wenn bestimmt wird, dass der Anwender die Benachrichtigungsmeldung, die durch die aktive elektronische Vorrichtung angezeigt wird, betrachtet hat, zu bestimmen, ob der zweite voreingestellte Wartezeitraum verstrichen ist; das Empfangsmodul (205) konfiguriert ist, dann, wenn bestimmt wird, dass der zweite voreingestellte Wartezeitraum nicht verstrichen ist, eine Meldung zu empfangen, dass der Anwender die Benachrichtigungsmeldung betrachtet hat.

8. Elektronische Vorrichtung (20) nach einem der Ansprüche 6 bis 7, wobei das Anzeigemodul (204) konfiguriert ist, dann, wenn das Steuermodul (206) bestimmt, dass keine gültige Kommunikationsadresse in der Kommunikationsadressenliste vorhanden ist, die Benachrichtigungsmeldung anzuzeigen.

9. Elektronische Vorrichtung (20) nach einem der Ansprüche 6 bis 8, wobei das Steuermodul konfiguriert ist, dann, wenn das Steuermodul (206) bestimmt, dass der erste voreingestellte Wartezeitraum verstrichen ist, zu bestimmen, dass die aktive elektronische Vorrichtung (30a) die Operation, um die Benachrichtigungsmeldung anzuzeigen, nicht ausgeführt hat.

10. Elektronische Vorrichtung (20) nach Anspruch 7, wobei das Steuermodul konfiguriert ist, dann, wenn das Steuermodul (206) bestimmt, dass der zweite voreingestellte Wartezeitraum verstrichen ist, zu bestimmen, dass die angezeigte Benachrichtigungsmeldung durch den Anwender nicht betrachtet worden ist.

11. System (10, 20, 30a, 30b), das eine elektronische Vorrichtung (30a, 30b), eine im Standby befindliche elektronische Vorrichtung (20) und einen Management-Server (10) umfasst, wobei
- die elektronische Vorrichtung (30a, 30b) Folgendes umfasst:
ein Steuermodul (301), das konfiguriert ist zum Bestimmen, ob die elektronische Vorrichtung (30a) aktiv ist;
ein Anzeigemodul (303), das konfiguriert ist zum Anzeigen einer Meldung;
ein Empfangsmodul (302), das konfiguriert ist zum Empfangen einer Meldung; und
ein Sendemodul (304), das konfiguriert ist zum Senden einer Meldung,
- wobei dann, wenn das Steuermodul (301) bestimmt, dass die elektronische Vorrichtung (30a) aktiv ist und das Empfangsmodul (302) eine Benachrichtigungsmeldung empfängt, die durch die sich im Standby befindliche elektronische Vorrichtung (20), die der elektronischen Vorrichtung (30a, 30b) zugeordnet ist, gesendet wurde, das Anzeigemodul (303) konfiguriert ist, die Benachrichtigungsmeldung anzuzeigen, und das Sendemodul (304) konfiguriert ist, eine Meldung an die im Standby befindliche elektronische Vorrichtung (20) zu senden, dass die aktive elektronische Vorrichtung (30a, 30b) die Benachrichtigungsmeldung angezeigt hat;
- wobei dann, wenn das Steuermodul (301) bestimmt hat, dass die elektronische Vorrichtung (30a) aktiv ist, das Sendemodul (304) konfiguriert ist, eine Kommunikationsadresse der aktiven elektronischen Vorrichtung (30a) zum Management-Server (10) zu senden;
- der Management-Server (10) konfiguriert ist, auf eine Anforderungsmeldung, die durch die im Standby befindliche elektronische Vorrichtung (20), die der aktiven elektronischen Vorrichtung (30a) zugeordnet ist, gesendet wurde, zu antworten und konfiguriert ist, die Kommunikationsadresse der aktiven elektronischen Vorrichtung (30a) gemäß einer Meldungskennung, die durch die Anforderungsmeldung geführt wird, zur in Bereitschaft befindlichen elektronischen Vorrichtung (20) zu senden, wobei die Anforderungsmeldung verwendet wird, um die Kommunikationsadresse der aktiven elektronischen Vorrichtung (30a) anzufordern; und
- die im Standby befindliche elektronische Vorrichtung (20) konfiguriert ist, zu bestimmen, ob die Kommunikationsadresse der aktiven elektronischen Vorrichtung (30a) gültig ist; die im Standby befindliche elektronische Vorrichtung (20) konfiguriert ist, dann, wenn die in Bereitschaft befindliche elektronische Vorrichtung (20) bestimmt, dass die Kommunikationsadresse der aktiven elektronischen Vorrichtung (30a) gültig ist, die Benachrichtigungsmeldung zum Empfangsmodul (302) zu senden; wobei
die im Standby befindliche elektronische Vorrichtung konfiguriert ist, einen ersten voreingestellten Wartezeitraum zeitlich festzulegen und zu bestimmen, ob die elektronische Vorrichtung die Benachrichtigungsmeldung angezeigt hat; die elektronische Vorrichtung konfiguriert ist, dann, wenn die in Bereitschaft befindliche elektronische Vorrichtung bestimmt, dass die elektronische Vorrichtung die Benachrichtigungsmeldung angezeigt hat, zu bestimmen, ob der erste voreingestellte Wartezeitraum verstrichen ist; und die im Standby befindliche elektronische Vorrichtung konfiguriert ist, dann, wenn die im Standby befindliche elektronische Vorrichtung bestimmt, dass der erste voreingestellte Wartezeitraum nicht verstrichen ist, eine Meldung zu empfangen, dass die elektronische Vorrichtung die Benachrichtigungsmeldung angezeigt hat.

## Revendications

1. Procédé de synchronisation de messages de notification pour des dispositifs électroniques (20, 30a, 30b), comprenant les étapes suivantes :
- observer, par un dispositif électronique (20), si ce dernier a un message de notification (301) ;
- si le dispositif électronique (20) a le message de notification, déterminer, par le dispositif électronique (20), si ce dernier est en veille (302) ;
- s'il est déterminé que le dispositif électronique (20) est en veille, déterminer, par le dispositif électronique en veille (20), si un dispositif électronique actif (30a) associé au dispositif électronique en veille (20) et ayant une adresse de communication valide est présent (303-305) ;
- si le dispositif électronique en veille (20) détermine que le dispositif électronique actif (30a) est présent, le dispositif électronique en veille (20) envoie le message de notification au dispositif électronique actif (306) ;
- si le dispositif électronique (20) est actif, le dispositif électronique (20) affiche le message de notification (313) reçu ;
- par le dispositif électronique en veille (20), minuter une première période d'attente prédéfinie et déterminer si le dispositif électronique actif (30a) a affiché le message de notification (307) ;
- si le dispositif électronique en veille (20) détermine que le dispositif électronique actif (30a) a affiché le message de notification, alors le dispositif électronique actif (30a) est configuré pour déterminer si la première période d'attente prédéfinie s'est écoulée (308) ;
- si le dispositif électronique en veille (20) détermine que la première période d'attente prédéfinie ne s'est pas écoulée, le dispositif électronique en veille (20) reçoit un message indiquant que le dispositif électronique actif (30a) a affiché le message de notification,
l'étape consistant à déterminer, par le dispositif électronique en veille (20), si le dispositif électronique actif (30a) associé au dispositif électronique en veille (20) et ayant une adresse de communication valide est présent (303-305) et l'étape consistant à déterminer, par le dispositif électronique en veille (20), que le dispositif électronique actif est présent et à envoyer, par le dispositif électronique en veille, le message de notification au dispositif électronique actif (306) comprenant les étapes suivantes :
- le dispositif électronique (20) envoie un message de demande à un serveur de gestion (10) (303), le message de demande étant utilisé pour demander une liste d'adresses de communication de dispositifs électroniques actifs (30a) et le message de demande transportant un identifiant de message ;
- le serveur de gestion (10) répond au message de demande (304) et envoie la liste d'adresses de communication de dispositifs électroniques actifs au dispositif électronique en veille (20) selon l'identifiant de message ;
- déterminer, par le dispositif électronique en veille (20), si au moins une adresse de communication valide est présente dans la liste d'adresses de communication (305) ;
- s'il est déterminé, par le dispositif électronique en veille (20), qu'au moins une adresse de communication valide est présente, le dispositif électronique en veille (20) envoie le message de notification au dispositif électronique actif (30a) ayant une adresse de communication valide (306).

2. Procédé selon la revendication 1, comprenant en outre l'étape suivante : s'il détermine que la première période d'attente prédéfinie s'est écoulée (308), le dispositif électronique en veille (20) confirme que le dispositif électronique actif (30a) n'a pas exécuté l'opération d'affichage du message de notification (314).

3. Procédé selon l'une quelconque des revendications précédentes, comprenant en outre les étapes suivantes :
- par le dispositif électronique en veille (20), minuter une seconde période d'attente prédéfinie et déterminer si l'utilisateur a visualisé le message de notification affiché par le dispositif électronique actif (310) ; si le dispositif électronique en veille (20) détermine que l'utilisateur a visualisé le message de notification affiché par le dispositif électronique actif (30a), déterminer, par le dispositif électronique en veille (20), si la seconde période d'attente prédéfinie s'est écoulée ;
- si le dispositif électronique en veille (20) détermine que la seconde période d'attente prédéfinie ne s'est pas écoulée, le dispositif électronique en veille (20) reçoit un message indiquant que l'utilisateur a visualisé le message de notification (312).

4. Procédé selon la revendication 3, comprenant en outre l'étape suivante : si la seconde période d'attente prédéfinie s'est écoulée, le dispositif électronique en veille (20) confirme que l'utilisateur n'a pas visualisé le message de notification (315).

5. Procédé selon l'une quelconque des revendications précédentes, comprenant en outre l'étape suivante : s'il est déterminé qu'aucune adresse de communication valide n'est présente dans la liste d'adresses de communication (305), le dispositif électronique en veille (20) affiche le message de notification (313).

6. Dispositif électronique (20), comprenant :
- un module d'observation (201), configuré pour observer si le dispositif électronique a un message de notification ;
- un module de détermination (202), configuré pour, si le module d'observation observe que le dispositif électronique a le message de notification, déterminer si le dispositif électronique est en veille ;
- un module de contrôle (206), configuré pour, si le module de détermination détermine que le dispositif électronique est en veille, déterminer si un dispositif électronique actif (30a) associé au dispositif électronique et ayant une adresse de communication valide est présent ;
- un module d'envoi (203), configuré pour envoyer un message ;
- si le module de contrôle (206) détermine que le dispositif électronique actif est présent, le module d'envoi (203) étant configuré pour envoyer le message de notification au dispositif électronique actif (30a) ;
- le module de contrôle (206) étant en outre configuré pour déterminer si au moins une adresse de communication valide est présente dans la liste d'adresses de communication ; s'il est déterminé qu'au moins une adresse de communication valide est présente, le module d'envoi (203) étant configuré pour envoyer le message de notification au dispositif électronique actif ayant une adresse de communication valide ;
le dispositif électronique (20) comprenant en outre :
- un module d'affichage (204), configuré pour afficher un message ; si le module de détermination (202) détermine que le dispositif électronique (20) est actif, le module d'affichage étant configuré pour afficher le message de notification ;
- un module de réception (206), configuré pour recevoir un message ; le module d'envoi (203) étant configuré pour envoyer un message de demande à un serveur de gestion (10), le message de demande étant utilisé pour demander une liste d'adresses de communication de dispositifs électroniques actifs (30a) et le message de demande transportant un identifiant de message ; le module de réception (205) étant configuré pour recevoir en provenance du serveur de gestion (10) une réponse au message de demande, comprenant la liste d'adresses de communication de dispositifs électroniques actifs selon l'identifiant de message ;
le module de contrôle (206) étant en outre configuré pour minuter une première période d'attente prédéfinie et déterminer si le dispositif électronique actif (30a) a affiché le message de notification ; s'il est déterminé que le dispositif électronique actif a affiché le message de notification, le module de contrôle (206) étant configuré pour déterminer si la première période d'attente prédéfinie s'est écoulée ; s'il est déterminé que la première période d'attente prédéfinie ne s'est pas écoulée, le module de réception (205) étant configuré pour recevoir un message indiquant que le dispositif électronique actif a affiché le message de notification.

7. Dispositif électronique (20) selon la revendication 6, dans lequel le module de contrôle (206) est en outre configuré pour minuter une seconde période d'attente prédéfinie et déterminer si l'utilisateur a visualisé le message de notification affiché par le dispositif électronique actif (30a) ; s'il est déterminé que l'utilisateur a visualisé le message de notification affiché par le dispositif électronique actif, le module de contrôle (206) est configuré pour déterminer si la seconde période d'attente prédéfinie s'est écoulée ; s'il est déterminé que la seconde période d'attente prédéfinie ne s'est pas écoulée, le module de réception (205) est configuré pour recevoir un message indiquant que l'utilisateur a visualisé le message de notification.

8. Dispositif électronique (20) selon l'une quelconque des revendications 6 et 7, dans lequel, si le module de contrôle détermine (206) qu'aucune adresse de communication valide n'est présente dans la liste d'adresses de communication, le module d'affichage (204) est configuré pour afficher le message de notification.

9. Dispositif électronique (20) selon l'une quelconque des revendications 6 à 8, dans lequel, si le module de contrôle (206) détermine que la première période d'attente prédéfinie s'est écoulée, le module de contrôle est configuré pour déterminer que le dispositif électronique actif (30a) n'a pas exécuté l'opération d'affichage du message de notification.

10. Dispositif électronique (20) selon la revendication 7, dans lequel, si le module de contrôle (206) détermine que la seconde période d'attente prédéfinie s'est écoulée, le module de contrôle est configuré pour déterminer que le message de notification affiché n'a pas été visualisé par l'utilisateur.

11. Système (10, 20, 30a, 30b) comprenant un dispositif électronique (30a, 30b), un dispositif électronique en veille (20) et un serveur de gestion (10),
- le dispositif électronique (30a, 30b) comprenant :
un module de contrôle (301), configuré pour déterminer si le dispositif électronique (30a) est actif ;
un module d'affichage (303), configuré pour afficher un message ;
un module de réception (302), configuré pour recevoir un message ; et
un module d'envoi (304), configuré pour envoyer un message,
- si le module de contrôle (301) détermine que le dispositif électronique (30a) est actif et si le module de réception (302) reçoit un message de notification envoyé par le dispositif électronique en veille (20) associé au dispositif électronique (30a, 30b), le module d'affichage (303) étant configuré pour afficher le message de notification et le module d'envoi (304) étant configuré pour envoyer au dispositif électronique en veille (20) un message indiquant que le dispositif électronique actif (30a, 30b) a affiché le message de notification ;
- si le module de contrôle (301) a déterminé que le dispositif électronique (30a) est actif, le module d'envoi (304) étant configuré pour envoyer (10) une adresse de communication du dispositif électronique actif (30a) au serveur de gestion ;
- le serveur de gestion (10) étant configuré pour répondre à un message de demande envoyé par le dispositif électronique en veille (20) associé au dispositif électronique actif (30a) et étant configuré pour envoyer l'adresse de communication du dispositif électronique actif (30a) au dispositif électronique en veille (20) selon un identifiant de message transporté par le message de demande, le message de demande étant utilisé pour demander l'adresse de communication du dispositif électronique actif (30a) ;
- le dispositif électronique en veille (20) étant configuré pour déterminer si l'adresse de communication du dispositif électronique actif (30a) est valide ; si le dispositif électronique en veille (20) détermine que l'adresse de communication du dispositif électronique actif (30a) est valide, le dispositif électronique en veille (20) étant configuré pour envoyer le message de notification au module de réception (302) ;
- le dispositif électronique en veille étant configuré pour minuter une première période d'attente prédéfinie et déterminer si le dispositif électronique a affiché le message de notification ; si le dispositif électronique en veille détermine que le dispositif électronique a affiché le message de notification, alors le dispositif électronique étant configuré pour déterminer si la première période d'attente prédéfinie s'est écoulée ; si le dispositif électronique en veille détermine que la première période d'attente prédéfinie ne s'est pas écoulée, le dispositif électronique en veille étant configuré pour recevoir un message indiquant que le dispositif électronique a affiché le message de notification.
